# EUROPÄISCHE PATENTSCHRIFT

(11) **EP 1 609 657 B1**
(45) Veröffentlichungstag und Bekanntmachung des Hinweises auf die Patenterteilung: **19.03.2008**
(21) Anmeldenummer: 05017568.6
(22) Anmeldetag: 30.09.2002
(51) Int. Cl.: B60K 31/00, B60T 7/22

(54) **Geschwindigkeitsregel-System mit Abstandssensorik für ein Kraftfahrzeug**
Cruise control with interval sensing for a motor vehicle
Régulateur de vitesse avec détection d'intervalle pour véhicule à moteur

(30) Priorität: 19.10.2001 DE 10151717
(43) Veröffentlichungstag der Anmeldung: 28.12.2005
(62) Teilanmeldung aus: 02021956.4
(73) Patentinhaber: Bayerische Motoren Werke Aktiengesellschaft, 80809 München (DE)
(72) Erfinder: Steinle, Joachim, Dr., 82993 München (DE); Tschernoster, Oliver, 80939 München (DE); Pfeiffer, Andreas, Dr., 83607 Holzkirchen (DE)

(56) Entgegenhaltungen:
- EP-A- 0 501 346
- EP-A- 1 065 090
- DE-A- 4 100 993
- DE-A- 19 544 925
- DE-A- 19 924 142
- DE-A- 19 958 520

## Beschreibung

Die Erfindung betrifft ein Geschwindigkeitsregel-System mit Abstandssensorik für ein Kraftfahrzeug, wobei dieses System nicht nur bei höheren Fahrgeschwindigkeiten, sondern insbesondere auch im Stop&Go-Betrieb automatisch die Einhaltung eines Mindestabstands zu einem vorausfahrenden Fahrzeug, das vom System als ein Zielobjekt erkannt ist, gewährleistet. Zum bekannten Stand der Technik wird auf die DE 199 58 520 A1 verwiesen.

Kraftfahrzeuge, insbesondere PKWs, mit einem Geschwindigkeitsregel-System mit Abstandssensorik können heute bereits bei einigen Herstellern erworben werden. Ein derartiges bspw. bei der Anmelderin der vorliegenden Patentanmeldung unter der Bezeichnung "Active Cruise Control" angebotenes System ermöglicht es, das Kraftfahrzeug unter Einhaltung eines gewünschten Abstands zu einem vor diesem fahrenden Kfz (dieses wird als Zielobjekt bezeichnet) mit einer gewünschten oder einer entsprechend geringeren Geschwindigkeit automatisch zu bewegen. Vom Prinzip her ist dabei die allgemein bekannte Fahrgeschwindigkeitsregelung, die eine bestimmte vorgegebene Geschwindigkeit einhält, um eine zusätzliche Abstandsfunktion erweitert, so dass der Einsatz einer solchen "aktiven " Fahrgeschwindigkeitsreglung auch im dichten Autobahn- und Landstrassenverkehr möglich wird. Diese sog. "aktive Fahrgeschwindigkeitsregelung" hält die vorgegebene Wunschgeschwindigkeit wie der konventionelle Geschwindigkeitsregler, wenn die eigene Fahrspur frei ist. Erkennt eine am Kraftfahrzeug angebrachte Abstandssensorik, die insbesondere auf Radarbasis arbeiten kann, ein vorausfahrendes Zielobjekt bzw. (Kraft-)Fahrzeug in der eigenen Spur, so wird die eigene Geschwindigkeit an diejenige des vorausfahrenden Kfz/Zielobjekts angepasst, derart, dass eine in der "aktiven Fahrgeschwindigkeitsreglung" bzw. im entsprechenden Geschwindigkeits-Regelsystem enthaltene Abstandsregelung automatisch einen situationsgerechten Abstand zum vorausfahrenden Kfz/Zielobjekt einhält und dementsprechend die "eigene" Fahrgeschwindigkeit, d.h. diejenige des mit der sog. aktiven Fahrgeschwindigkeitsregelung ausgestatteten Fahrzeugs, verringert.

Bspw. das bei der Anmelderin der vorliegenden Patentanmeldung unter der Bezeichnung "Active Cruise Control" angebotene System ist nur in einem Geschwindigkeitsbereich von 30 - 180 km/h nutzbar, während im Geschwindigkeitsbereich unterhalb von 30 km/h dieses System nicht aktivierbar ist bzw. sich nach einem bestimmten Algorithmus automatisch abschaltet. Auch können stehende Zielobjekte - zu denen grundsätzlich ebenfalls Abstand gehalten werden muss - nicht oder nur bedingt für die Regelung verwendet werden.

Um ein Geschwindigkeitsregel-System mit Abstandssensorik auch im Geschwindigkeitsbereich unterhalb bspw. 30 km/h insbesondere in Stausituationen nutzen zu können, setzt dies einen durch zusätzliche Sensoren erweiterten Sensorsichtbereich voraus. Weiterhin sollte ein Algorithmus zwischen relevanten stehenden und fahrenden Zielobjekten differenzieren können. Eine mögliche Systemausprägung könnte darin bestehen, zwischen einem herkömmlichen Regel-Bereich, in welchem keine Reaktion auf stehende Ziele erfolgt, und einem Stop&Go-Bereich, in dem auf stehende Zielobjekte reagiert wird, zu unterscheiden. Dieser sog. Stop&Go-Bereich kann geschwindigkeitsmäßig nach oben hin durch einen Grenzwert bspw. in der Größenordnung von 30 km/h beschränkt sein.

In der eingangs genannten DE 199 58 520 A1 ist ein Geschwindigkeitsregel-System mit Abstandssensorik nach dem Oberbegriff des Anspruchs 1 beschrieben, das eine solche Unterscheidung zwischen dem üblichen Betrieb bei höheren Fahr-Geschwindigkeiten und einem speziellen Stop&Go-Betrieb für relativ geringe Fahrgeschwindigkeiten sowie den Fzg-Stillstand vornimmt und abhängig vom jeweiligen Betriebszustand auf stehende Zielobjekte entweder reagiert oder nicht reagiert. Diese Unterscheidung zwischen einem bislang üblichen Regelbereich bei höheren Fahrgeschwindigkeiten und einem sog. Stop&Go-Bereich (und damit zwischen einer Reaktion bzw. keiner Reaktion auf stehende Zielobjekte) muss jedoch dem Fahrer des Kfz's in geeigneter Weise mitgeteilt werden. Unter Umständen muss der Fahrer sogar durch eine Bedienaktion zwischen den beiden genannten Regel-Bereichen umschalten.

Eine derart gestaltete Erweiterung eines bisher üblichen (und nur bei höheren Fahrgeschwindigkeiten arbeitenden) Geschwindigkeitsregel-Systems in den unteren Geschwindigkeitsbereich (sog. Stop&Go-Betrieb) insbesondere mit einer vom Fahrer durchzuführenden Umschaltung führt jedoch schnell zu einer den Fahrer verwirrenden Vielfalt von notwendigen Bedienaktionen. Durch diese Vielfalt läuft ein Fahrer möglicherweise auch Gefahr, die Bereiche, in denen auf stehende Zielobjekte reagiert bzw. nicht reagiert wird, zu verwechseln. Bei Berücksichtigung stehender Zielobjekte besteht außerdem die Gefahr, dass bspw. aufgrund der Auswahl eines nicht relevanten Zielobjekts (z.B. ein am Straßenrand parkendes Fahrzeug, Leitplanken, etc.) eine sowohl für den Fahrer des Kfz selbst als auch für den nachfolgenden Verkehr nicht plausible Fahrzeugreaktion z.B. in Form einer unerwartet starken Verzögerung der Fahrzeug-Fortbewegung, hervorgerufen werden kann.

Eine Abhilfemaßnahme für diese geschilderte Problematik aufzuzeigen, ist Aufgabe der vorliegenden Erfindung.

Die Lösung dieser Aufgabe ist bei einem Geschwindigkeits-Regelsystem nach dem Oberbegriff des Anspruchs 1 insbesondere dadurch gekennzeichnet, dass sich für den Fahrer des Kraftfahrzeugs eine einheitliche Systemstruktur darstellt, die insbesondere nicht offensichtlich in verschiedene Geschwindigkeits-Bereiche unterteilt ist, obwohl das Geschwindigkeitsregel-System im Stop&Go-Betrieb anders reagiert als bei höheren Fahrgeschwindigkeiten.

Generell wird zur Behebung der oben genannten Nachteile somit ein Geschwindigkeitsregel-System mit Abstandssensorik vorgeschlagen, das praktisch im gesamten Betriebsbereich des Kfz und insbesondere auch im Stop&Go-Betrieb arbeitet und das dabei keine für den Fahrer offensichtliche Unterscheidung zwischen verschiedenen Bereichen vornimmt. Der Fahrer muss somit nur ein einziges System mit im wesentlichen einheitlichen und insbesondere sinnvollen, klar verständlichen Verhaltensmustern bedienen. Andererseits soll systemimmanent zwischen verschiedenen Bereichen unterschieden werden, d.h. zur Steigerung der Systemsicherheit bzw. zur Vermeidung von Fehlreaktionen des Fahrers sind durchaus unterschiedliche System-Reaktionen auf bestimmte Bedingungen erwünscht, je nachdem ob das Fzg. aktuell mit höherer Geschwindigkeit gefahren wird oder sich im Stop&Go-Betrieb befindet. Vorab sei an dieser Stelle als Beispiel genannt, dass das System im Stop&Go-Betrieb ein stehendes Zielobjekt nicht vollkommen außer Acht lassen sollte, dabei jedoch nicht wie bei einem zunächst bewegten und sich dann verlangsamenden Zielobjekt reagieren darf, da dies zu unpassend starken Abbremsvorgängen führen würde.

Ein erfindungsgemäßes Geschwindigkeitsregel-System mit Abstandssensorik enthält somit keine vom Fahrer zu tätigende oder zu quittierende Umschaltung zwischen dem sog. Stop&Go-Bereich und einem Bereich höherer Fahrgeschwindigkeiten, sondern es handelt sich quasi um ein durchgängiges System, das vom Fahrzeug-Stillstand bis zur ggf. verringerten Maximalgeschwindigkeit des Fahrezugs reicht und das keine offensichtliche Bereichsumschaltung enthält. Dabei wird vorgeschlagen, dass die WunschGeschwindigkeit wie im bekannten Stand der Technik in einem Bereich zwischen beispielsweise ca. 30 km/h und der (ggf. verringerten) Maximalgeschwindigkeit des Fahrezugs vorgegeben werden kann.

Während im bekannten Stand der Technik eine Betätigung der Betriebsbremse durch den Fahrer (also üblicherweise ein Niedertreten des Bremspedals) stets ein absolutes Abschaltkriterium für das Geschwindigkeitsregel-System ist, soll nunmehr von diesem bisherigen Prinzip abgewichen werden, wenn das Kraftfahrzeug steht, aber ansonsten betriebsbereit ist.

Vom bisher üblichen absoluten Abschaltkriterium für das Geschwindigkeitsregel-System in Form einer Fahrer-Betätigung der Betriebsbremse wird abgewichen, wenn - wie im Patentanspruch 1 vorgeschlagen wird - aus dem Fahrzeug-Stillstand heraus bei vom Fahrer betätigter Betriebsbremse das Geschwindigkeitsregel-System vom Fahrer aktivierbar ist. Diese Aktivierung kann bevorzugt über ein Handbedienelement erfolgen. Nach erfolgter System-Aktivierung hält das System die Betriebsbremse gespannt, so dass der Fahrer das Bremspedal oder dgl. nicht weiter gedrückt halten muss, und zwar solange, bis der Fahrer durch ein Losfahr-Kommando einen durch das System geregelten Fahrbetrieb vorgibt.

In anderen Worten ausgedrückt kann bzw. soll ein erfindungsgemäßes Geschwindigkeitsregel-System mit Abstandssensorik im Gegensatz zu den bisher üblichen Systemen somit auch im Stand, d.h. bei stillstehendem, dabei jedoch betriebsbereiten Kfz aktivierbar sein. Ein wesentliches Kriterium für die Betriebsbereitschaft ist beispielsweise, dass das Fahrzeug-Antriebsaggregat eingeschaltet, d.h. aktiv ist. Für das Ingang-Setzen des Geschwindigkeitsregel-Systems (mit Abstandssensorik) soll dann der Fahrer zunächst durch Betätigung der Fahrzeug-Betriebsbremse das Kraftfahrzeug im Stand halten. Nach Aktivierung des Systems durch den Fahrer (bspw. durch geeignete Betätigung eines Ein-Aus-Schalters) wird durch entsprechende Ansteuerung eines Bremsaktuators oder dgl. das Kfz ohne Zutun des Fahrers weiter im Stand gehalten und zwar in jedem Fall, d.h. unabhängig davon, ob das Geschwindigkeitsregel-System ein Zielobjekt erkannt hat bzw. erkennt oder nicht, d.h. auch denn, wenn überhaupt kein Zielobjekt vorhanden ist.

Im letztgenannten Fall kann der Fahrer des Kfz über eine geeignete Anzeige und ggf. mit einem zusätzlichen Akustiksignal mitgeteilt bekommen, dass er über eine bestimmte Bedienaktion das Geschwindigkeitsregel-System zum automatischen Losfahren auffordern kann (sog. "Go Request"). Ist hingegen ein Zielobjekt vorhanden oder wird (bspw.) erkannt, dass sich ein zunächst stehendes Objekt (langsam) entfernt, so dass dieses Zielobjekt detektiert und anerkannt wird, so kann mit der Wegbewegung dieses Zielobjekts ebenso ein sog. "Go Request" ausgelöst werden, d.h. der Fahrer wird vorzugsweise zur Abgabe eines Losfahr-Kommandos aufgefordert. Nach Ausführen einer entsprechenden Bedienaktion durch den Fahrer, d.h. nach Abgabe des Losfahr-Kommandos (bspw. in Form eines Quittierens des"Go Request"-Signals) kann dann das Geschwindigkeitsregel-System die Betriebsbremse lösen und das Kfz auf die Wunschgeschwindigkeit beschleunigen bzw. abstandsgeregelt dem registrierten Zielobjekt folgen lassen. Dabei kann das sog. Losfahr-Kommando des Fahrers darin bestehen, dass eine sog. Wiederaufnahmetaste (bzw. allg. ein Handbedienelement) oder auch der Lastwunschgeber, d.h. das Gaspedal oder dgl. betätigt wird.

Um zwischen einem unbeabsichtigtem Betätigen der genannten Wiederaufnahmetaste oder des Gaspedals und der im vorhergehenden Absatz beschriebenen Abgabe eines sog. Losfahr-Kommandos zu unterscheiden, kann man die entsprechenden vom Fahrer durchzuführende(n) Handlung(en) noch zusätzlich mit einer Mindestausführdauer koppeln, d.h. der Fahrer muss bspw. die Wiederaufnahmetaste mindestens für eine festgelegte Zeit von einigen Sekunden drücken, damit das Fahrzeug dann tatsächlich automatisch losfährt. Gleiches gilt für die Betätigung des Gaspedals oder dgl. Im übrigen kann bei einer (derartigen) System-Aktivierung im Geschwindigkeitsbereich zwischen Fzg-Stillstand und einer Grenzgeschwindigkeit, oberhalb derer das Geschwindigkeitsregel-System analog den derzeit in Serie befindlichen Systemen arbeitet, d.h. bei einer System-Aktivierung im sog. Stop&Go-Betrieb, automatisch die Wunschgeschwindigkeit auf die genannte Grenzgeschwindigkeit (bspw. 30 km/h) oder auch auf die innerorts gesetzlich zulässige Höchstgeschwindigkeit gesetzt werden.

## Patentansprüche

1. Geschwindigkeitsregel-System mit Abstandssensorik für ein Kraftfahrzeug, wobei dieses System nicht nur bei höheren Fahrgeschwindigkeiten, sondern insbesondere auch im Stop&Go-Betrieb automatisch die Einhaltung eines Mindestabstands zu einem vorausfahrenden Fahrzeug, das vom System als ein Zielobjekt erkannt ist, gewährleistet, **dadurch gekennzeichnet, dass** sich für den Fahrer des Kraftfahrzeugs eine einheitliche Systemstruktur darstellt, die insbesondere nicht offensichtlich in verschiedene Geschwindigkeits-Bereiche unterteilt ist, obwohl das Geschwindigkeitsregel-System im Stop&Go-Betrieb zumindest auf folgende Bedingung anders reagiert als bei höheren Fahrgeschwindigkeiten: aus dem Fahrzeug-Stillstand heraus ist bei vom Fahrer betätigter Betriebsbremse das Geschwindigkeitsregel-System vom Fahrer aktivierbar, wonach das System die Betriebsbremse gespannt hält, bis der Fahrer durch ein Losfahr-Kommando einen durch das System geregelten Fahrbetrieb vorgibt, während zumindest bei höheren Fahrgeschwindigkeiten mit einer Betätigung der Betriebsbremse stets das System abgeschaltet wird, wobei der Fahrer zur Abgabe des Losfahr-Kommandos aufgefordert wird, wenn sich ein sich vor dem Kraftfahrzeug befindendes und als solches erkanntes Zielobjekt entfernt und wobei bei einer Aktivierung des Geschwindigkeits-Systems im Stop&Go-Betrieb zwischen einem Fahrzeugstillstand und einer Grenzgeschwindigkeit, oberhalb derer das Geschwindigkeitsregel-System analog den derzeit in Serie befindlichen Systemen arbeitet, automatisch die Wunschgeschwindigkeit auf die genannte Grenzgeschwindigkeit oder auf die innerorts gesetzlich zulässige Höchstgeschwindigkeit gesetzt wird.

2. Geschwindigkeitsregel-System mit Abstandssensorik nach Anspruch 1, **dadurch gekennzeichnet, dass** ein beabsichtigtes Losfahr-Kommando nur dann erkannt wird, wenn dieses für eine Mindestausführdauer anliegt, damit das Fahrzeug dann tatsächlich losfährt.

## Claims

1. A cruise control system with a distance sensor system for a motor vehicle, this system automatically ensuring that a minimum distance is observed from the vehicle ahead detected by the system as a target object, not only at relatively high driving speeds, but also more especially in stop & go operation, **characterised in that** the driver of the vehicle is provided with a uniform system structure which more especially is not obviously divided into different speed ranges, although the cruise control system in stop & go operation reacts differently to the following condition compared to operation at higher driving speeds: the cruise control system may be activated by the driver from the vehicle standstill condition with the driver actuating the service brake, thereafter the system keeps the service brake tensioned until the driver allows a drive operation controlled by the system by issuing a start-moving command, while the system is always disconnected by activating the service brake at least at relatively high driving speeds, the driver being requested to give the start-moving command when a target object which is located in front of the vehicle and is detected as such moves away and, when the cruise control system is activated in stop & go operation between a vehicle standstill and a limiting speed above which the cruise control system operates analogously to the currently produced systems, the desired speed is automatically set at the mentioned limiting speed or at the maximum speed permitted by law within built-up areas.

2. A cruise control system with a distance sensor system according to claim 1, **characterised in that** an intentional start-moving command is only detected when it is present for a minimum implementation duration, so that the vehicle then actually starts moving.

## Revendications

1. Système de régulation de vitesse équipé de capteurs de distance pour un véhicule automobile selon lequel non seulement aux vitesses de déplacement élevées mais notamment également en mode de fonctionnement marche/arrêt, le système assure automatiquement le respect d'une distance minimale par rapport à un véhicule qui précède, détecté par le système comme objet cible,
**caractérisé en ce qu'**
il représente une structure uniforme du système pour le conducteur du véhicule qui en particulier n'est pas subdivisé apparemment en différentes plages de vitesses bien que le système de régulation de vitesse réagisse autrement au moins aux conditions suivantes en mode de fonctionnement marche/arrêt qu'aux vitesses de déplacement élevées : partant de l'état d'arrêt du véhicule, si le frein de service est actionné par le conducteur, le système de régulation de vitesse sera activé par le conducteur et le système maintient serré le frein de service jusqu'à ce que le conducteur, par un ordre de libération, prédéfinisse un mode de fonctionnement régulé par le système, alors qu'au moins aux vitesses de déplacement élevées, l'actionnement du frein de service coupe toujours le système, le conducteur étant requis d'émettre un ordre de démarrage si un objet cible qui se trouve devant le véhicule et qui est reconnu en tant que tel s'éloigne et qu'ainsi en activant le système de régulation en mode de fonctionnement marche/arrêt, entre l'arrêt du véhicule et une vitesse limite, au-dessus de laquelle le système de régulation de vitesse travaille de façon analogue aux systèmes équipant actuellement les véhicules en série, passe automatiquement la vitesse souhaitée sur la vitesse limite indiquée ou se met à la vitesse maximale autorisée par la réglementation dans les localités.

2. Système de régulation de vitesse avec des capteurs de distance selon la revendication 1,
**caractérisé en ce qu'**
un ordre de démarrage, intentionnel n'est reconnu en tant que tel que si cet ordre est appliqué pendant une durée minimale pour que le véhicule démarre alors effectivement.
